(19) Europäisches Patentamt
European Patent Office
Office européen des brevets

(11) EP 2 918 793 A1

(12) EUROPÄISCHE PATENTANMELDUNG

(43) Veröffentlichungstag:
16.09.2015 Patentblatt 2015/38

(51) Int Cl.:
F01K 7/08 (2006.01)    F01K 17/02 (2006.01)

(21) Anmeldenummer: 14159565.2

(22) Anmeldetag: 13.03.2014

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME

(71) Anmelder: Siemens Aktiengesellschaft
80333 München (DE)

(72) Erfinder:
• Beul, Ulrich
  45219 Essen (DE)

• Huckriede, Dirk
  41352 Korschenbroich (DE)
• Koebe, Mario
  45478 Mülheim an der Ruhr (DE)
• Obert, Sandra
  40239 Düsseldorf (DE)
• Pfaller, Dirk
  45149 Essen (DE)
• Stiehm, Andreas
  53424 Remagen-Kripp (DE)
• Zahn, Sebastian
  47051 Duisburg (DE)
• Zimmer, Gerta
  45468 Mülheim an der Ruhr (DE)

(54) **Regelkonzept zur Fernwärmeauskopplung bei einer Dampfkraftanlage**

(57) Die Erfindung betrifft eine Dampfkraftanlage (1), wobei die Niederdruck-Teilturbine (2c) derart ausgelegt ist, dass deren Schluckfähigkeit ($\dot{M}_s$) unter der Schluck- fähigkeit ($\dot{M}_{s,max}$) liegt, die einer Auslegung der Niederdruck-Teilturbine (2c) bei einem maximalen Lastfall ohne Fernwärme-Auskopplung (24) entsprechen würde.

**Beschreibung**

Die Erfindung betrifft eine Dampfkraftanlage umfassend eine Dampfturbine umfassend eine Hochdruck-Teilturbine, eine Mitteldruck-Teilturbine und eine Niederdruck-Teilturbine, wobei die Mitteldruck-Teilturbine einen Mitteldruck-Dampfeinlass und einen Mitteldruck-Dampfauslass aufweist, wobei die Niederdruck-Teilturbine einen Niederdruck-Dampfeinlass und einen Niederdruck-Dampfauslass aufweist, wobei die Mitteldruck-Teilturbine eine eine Mitteldruck-Strömungsrichtung aufweisende Mitteldruck-Beschaufelung und die Niederdruck-Teilturbine eine eine Niederdruck-Strömungsrichtung aufweisende Niederdruck-Beschaufelung aufweist. Ferner umfasst die Dampfkraftanlage eine Überströmleitung, die den Mitteldruck-Dampfauslass strömungstechnisch mit dem Niederdruck-Dampfeinlass verbindet, wobei in der Überströmleitung eine Armatur angeordnet ist.

Die Erfindung betrifft ferner ein Verfahren zum Betreiben einer Dampfkraftanlage.

Dampfkraftanlagen kommt in der heutigen Zeit eine Schlüsselstellung zu, da damit große Leistungen erzeugt werden können. Bauformen der Dampfturbinen umfassen beispielsweise Kleinstanlagen, die für einen Leistungsbereich von einigen wenigen Kilowatt und Dampfkraftanlagen, die für über 1.000 Megawatt ausgelegt sind. Hauptträger der Grundlastversorgung sind Braunkohlekraftwerke. Ein Großteil der Mittellastabdeckung der Stromerzeugung wird durch Steinkohlekraftwerke hergestellt.

Allgemein wird in einem Dampfkraftwerk in einem Dampferzeuger Wasserdampf erzeugt, dessen thermische Energie sich in der Dampfturbine in Rotationsenergie des Rotors umwandelt und schließlich im Generator in elektrische Energie für die Energieversorgung umgewandelt wird.

Der Wirkungsgrad bei einigen Dampfkraftwerken liegt bei ca. 47%. Bei Gas- und Dampfturbinen-Kraftwerken liegt der Wirkungsgrad sogar bei über 60%.

Neben den reinen Dampfkraftwerken, bei denen der Dampf dazu verwendet wird, den Rotor einer Dampfturbine anzutreiben und somit schließlich elektrische Energie zu erzeugen, existieren so genannte Kraftwärmeanlagen. Solche Kraftwärmeanlagen zeichnen sich dadurch aus, dass sie zur Versorgung von Fernwärmenetzen Dampf aus verschiedenen Bereichen der Dampfturbine zur Verfügung stellen. Ein solcher Dampf wird auf Wärmetauscher geleitet, wo er im Idealfall kondensiert und einen Großteil seiner Energie an das Fernwärmenetz abgibt. Somit liefern solche Kraftwärmeanlagen nicht nur elektrische Energie sondern auch thermische Energie, die ins Fernwärmenetz eingespeist wird. Allerdings ist die benötigte Fernwärmeleistung nicht konstant, sondern ändert sich zeitlich. Dadurch ist ein Regelkonzept für die Dampfturbine und Entnahmen notwendig.

Daher wird bei den Kraftwärmeanlagen häufig eine Armatur in Form einer Stauklappe in der Überströmleitung eingesetzt. Die Überströmleitung ist die strömungstechnische Verbindung zwischen einer Mitteldruck-Teilturbine und einer Niederdruck-Teilturbine. Die Stauklappe in der Überströmleitung dient dazu, den Druck an den Anzapfungen für die Fernwärmeauskopplung zu kontrollieren. Dadurch liefert die Dampfturbine die geforderte Wärmemenge für das Fernwärmenetz. Allerdings führt der Einsatz einer Stauklappe zu deutlichen Wirkungsgradnachteilen im Entnahmebetrieb und zu zusätzlichen Kosten für die erforderliche Hard- und Software. Des Weiteren ist es möglich, dass entsprechende Störfälle auftauchen könnten, wie zum Beispiel das Anfahren des Dampfkraftwerks gegen eine fehlerhaft geschlossene Klappe, die es zu berücksichtigen gilt. Die Absicherung gegen solche Störfälle führt zu einem automatisierungstechnischen Mehraufwand, wobei auch angrenzende Systeme entsprechend ausgelegt werden müssen, was zu erhöhten Auslegungsparametern und dadurch zu einem Kostennachteil führt.

Daher werden Kraftwärmeanlagen meistens auf den maximalen Wirkungsgrad ohne Entnahme für die Fernwärmeversorgung ausgelegt. Solch eine Auslegung macht den Einsatz einer Stauklappe notwendig, um die thermische Leistung zu erreichen, denn der Druck an der Fernwärmeentnahme muss mindestens dem Sattdampfdruck der maximalen Temperatur der Fernwärme entsprechen. Ferner macht diese Auslegung es erforderlich, dass das Gehäuse der Mitteldruck-Teilturbine vor zu kaltem Dampf geschützt werden muss und dass das Druckgefälle über der letzten Laufschaufel der Mitteldruck-Beschaufelung begrenzt werden muss.

Aufgabe der Erfindung ist es, eine verbesserte Dampfkraftanlage anzugeben.

Gelöst wird diese Aufgabe durch eine Dampfkraftanlage umfassend eine Dampfturbine umfassend eine Hochdruck-Teilturbine, eine Mitteldruck-Teilturbine und eine Niederdruck-Teilturbine, wobei die Mitteldruck-Teilturbine einen Mitteldruck-Dampfeinlass und einen Mitteldruck-Dampfauslass aufweist, wobei die Niederdruck-Teilturbine einen Niederdruck-Dampfeinlass und einen Niederdruck-Dampfauslass aufweist, wobei die Mitteldruck-Teilturbine eine eine Mitteldruck-Strömungsrichtung aufweisende Mitteldruck-Beschaufelung und die Niederdruck-Teilturbine eine eine Niederdruck-Strömungsrichtung aufweisende Niederdruck-Beschaufelung aufweist, wobei die Dampfkraftanlage ferner umfasst eine Überströmleitung, die den Mitteldruck-Dampfauslass strömungstechnisch mit dem Niederdruck-Dampfeinlass verbindet, wobei in der Überströmleitung eine Armatur angeordnet ist, wobei die Niederdruck-Teilturbine einen weiteren Niederdruck-Dampfeinlass in die Niederdruck-Beschaufelung aufweist, der stromabwärts der Niederdruck-Strömungsrichtung angeordnet ist.

Ferner wird die Aufgabe gelöst durch ein Verfahren zum Betreiben einer Dampfkraftanlage, wobei ein Dampf in einem Dampferzeuger erzeugt wird und zu einer Hochdruck-Teilturbine strömt und von dort zu einem Zwischenüberhitzer, wobei der Dampf im Zwischenüberhitzer erwärmt wird und durch eine Mitteldruck-Teilturbine strömt, wobei der Dampf nach der Mitteldruck-Teilturbine über eine Überströmleitung zu einer Niederdruck-Teilturbine geführt wird, wobei die Mitteldruck-Teilturbine eine Fernwärmeanzapfung zum Auskoppeln von Fernwärmedampf aufweist und die Niederdruck-Teilturbine für eine Schluckfähigkeit ausgelegt wird, die unter der Schluckfähigkeit liegt, die eine Auslegung der Niederdruck-Teilturbine bei einem maximalen Lastfall ohne Fernwärmeauskopplung entsprechen würde.

Der erfinderische Vorteil solch einer Dampfkraftanlage umfassend einer Dampfturbine, die primär als Heizmaschine betrieben wird, ist der, dass die Niederdruck-Teilturbine bewusst für eine deutlich kleinere Schluckfähigkeit als für den Lastfall (100%) ohne Fernwärmekopplung ausgelegt wird. Für den Fall einer Entnahme von Fernwärmedampf aus der Dampfturbine ist der Niederdruck-Eintrittsdruck bei gleichem Niederdruck-Eintrittsmassenstrom größer als in der bisherigen Ausführung. Dadurch reduzieren sich die Drosselung der Stauklappe und damit auch die energetischen Verluste.

Bei einem Betriebspunkt, bei dem keine Fernwärmeauskopplung stattfindet, würde der Druck vor der Niederdruck-Teilturbine durch den zusätzlichen Massenstrom über einen maximal zulässigen Wert ansteigen. Dieser zusätzliche Massenstrom wird erfindungsgemäß über die zweite Abzweigung zur Flut-Beschaufelung berücksichtigt. Dabei wird der zusätzliche Massenstrom in die Beschaufelung der Niederdruck-Teilturbine stromabwärts der ersten Schaufelreihe, -stufe eingeleitet. Damit wird die Schluckfähigkeit der Niederdruck-Teilturbine vergrößert und der Eintrittsdruck der Niederdruck-Teilturbine nahezu konstant gelassen.

Je größer der durch die zweite Abzweigung eingeleitete Massenstrom ausgeführt werden kann, desto mehr verändert sich die Schluckfähigkeit der Niederdruck-Teilturbine und desto mehr verringern sich die Drosselverluste über die Stauklappe im Heizbetrieb. Damit vergrößert sich der Wirkungsgrad der Dampfturbine, wobei bei entsprechenden Auslegungen auch auf die Stauklappe verzichtet werden könnte.

In den Unteransprüchen sind vorteilhafte Weiterbildungen angegeben.

Die Erfindung wird nun anhand eines Ausführungsbeispiels näher erläutert.

Es zeigen

Figur      eine erfindungsgemäße Dampfkraftanlage.

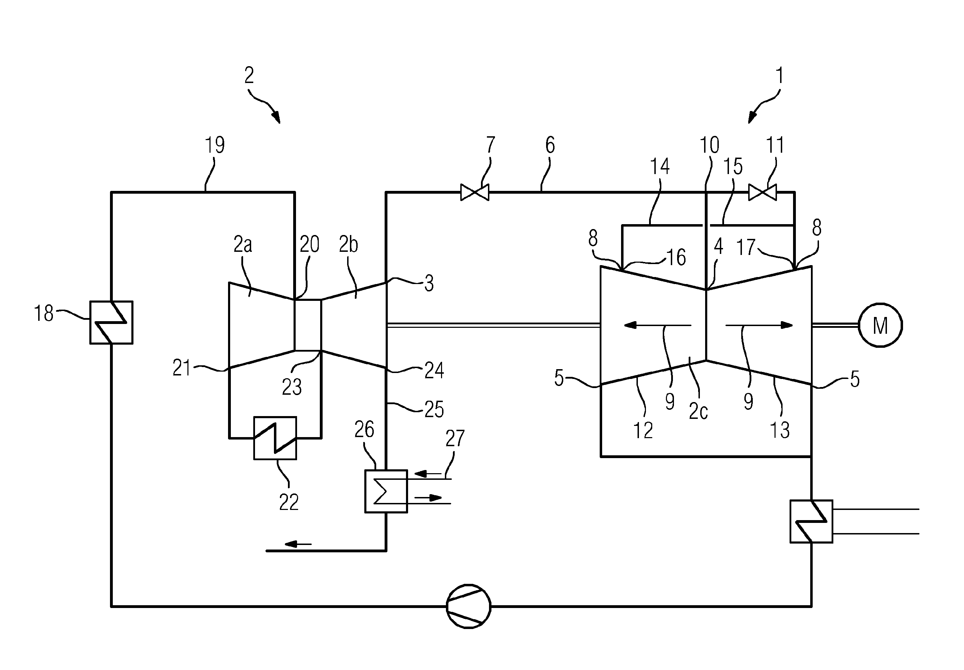

Die Figur zeigt eine Dampfkraftanlage 1. Die Dampfkraftanlage 1 umfasst eine Dampfturbine 2, die wiederum eine Hochdruck-Teilturbine 2a, eine Mitteldruck-Teilturbine 2b und eine Niederdruck-Teilturbine 2c umfasst. Die Hochdruck-Teilturbine 2a und Mitteldruck-Teilturbine 2b kann in einer kompakten Bauweise mit einem gemeinsamen Gehäuse ausgeführt sein. In ähnlicher Weise kann die Hochdruck-Teilturbine 2a und die Mitteldruck-Teilturbine 2b in separaten Gehäusen ausgebildet werden. Die Niederdruck-Teilturbine 2c ist zweiflutig ausgeführt.

Die Mitteldruck-Teilturbine 2b weist einen Mitteldruck-Dampfauslass 3 auf. Die Mitteldruck-Teilturbine 2b weist eine eine Mitteldruck-Strömungsrichtung aufweisende Mitteldruck-Beschaufelung auf (nicht dargestellt). Die Niederdruck-Teilturbine weist eine eine Niederdruck-Strömungsrichtung aufweisende Niederdruck-Beschaufelung auf (nicht dargestellt).

Die Niederdruck-Teilturbine 2c weist einen Niederdruck-Dampfeinlass 4 und einen Niederdruck-Dampfauslass 5 für jede Flut auf. Der Mitteldruck-Dampfauslass 3 und der Niederdruck-Dampfeinlass 4 sind strömungstechnisch über eine Überströmleitung 6 miteinander verbunden. In der Überströmleitung 6 ist eine Armatur 7 angeordnet.

Die Niederdruck-Teilturbine 2c weist einen weiteren Niederdruck-Dampfeinlass 8 in die Niederdruck-Beschaufelung auf. Der weitere Niederdruck-Dampfeinlass 8 ist stromabwärts der Niederdruck-Strömungsrichtung 9 angeordnet.

Die Überströmleitung 6 weist eine Abzweigung 10 auf, die mit dem weiteren Niederdruck-Dampfeinlass 8 strömungstechnisch verbunden ist.

In der Abzweigung 10 ist eine Abzweigungsarmatur 11 angeordnet. Die Armatur 7 ist als Klappe oder Ventil ausgebildet. Die Abzweigungsarmatur 11 ist ebenfalls als Klappe oder Ventil ausgebildet.

Die Niederdruck-Teilturbine 2c weist eine erste Flut 12 mit einer ersten Flut-Beschaufelung (nicht dargestellt) auf. Des Weiteren weist die Niederdruck-Teilturbine 2c eine zweite Flut 13 mit einer zweiten Flut-Beschaufelung (nicht dargestellt) auf. Die Abzweigung 10 weist eine zweite Abzweigung 14 auf, die nach der Abzweigungsarmatur 11 angeordnet ist. Die erste Abzweigung 14 mündet in die Flut-Beschaufelung der Flut 12. Somit mündet die erste Abzweigung 14 in einen ersten Flut-Dampfeinlass 16.

Des Weiteren weist die Abzweigung eine zweite Abzweigung 15 auf, die eine strömungstechnische Verbindung zur zweiten Beschaufelung herstellt und dort in einen zweiten Flut-Dampfeinlass 17 mündet.

Die Dampfkraftanlage 1 weist des Weiteren einen Dampferzeuger 18 auf, in dem Dampf erzeugt wird und über eine Frischdampfleitung 19 zu einem Hochdruck-Dampfeinlass 20 mündet. Die Hochdruck-Teilturbine 2a weist einen Hochdruck-Dampfauslass 21 auf, wobei der aus der Hochdruck-Teilturbine 2a ausströmende Dampf in einen Zwischenüberhitzer 22 strömt und dort auf eine höhere Temperatur erwärmt wird und anschließend mit einem Mitteldruck-Dampfeinlass 23 strömungstechnisch verbunden ist.

Die thermische Energie des Dampfes gelangt somit über die Frischdampfleitung 19 zur Dampfturbine 2 und wird dort in Rotationsenergie eines Rotors umgewandelt. Die Hochdruck-Beschaufelung als auch die Mitteldruck-Beschaufelung ist nicht näher dargestellt. Die Hochdruck-Beschaufelung und die Mitteldruck-Beschaufelung umfassen mehrere Schaufelstufen. Vor einer Schaufelstufe, insbesondere letzten Schaufelstufe, wird über eine Fernwärmeauskopplung 24 ein Dampf ausgeströmt, der für die Fernwärmeheizung verwendet wird. Dazu gelangt der in der Mitteldruck-Teilturbine 2b befindliche Dampf über die Fernwärmeauskopplung 24 in eine Fernwärmeleitung 25 und von dort in einen Wärmetauscher 26, durch den die Fernwärmeleitungen 27 angeordnet sind und das in der Fernwärmeleitung 27 befindliche Medium erwärmt. Nach Durchströmen des Wärmetauschers 26 strömt der Dampf in die Dampfkraftanlage (nicht näher dargestellt).

Die Fernwärme-Auskopplung 24 wird auch als Fernwärme-Entnahme bezeichnet und ist zum Entnehmen von Dampf für die Fernwärme ausgebildet. Die Niederdruck-Teilturbine 2c ist für eine Schluckfähigkeit $\dot{M}_s$ ausgelegt. Die Schluckfähigkeit ist die Menge an Dampf pro Zeiteinheit, die in Abhängigkeit von Druck und Temperatur vor und nach der Druckdifferenz durch die Beschaufelung strömt. Die Niederdruck-Teilturbine 2c ist für eine maximale Schluckfähigkeit $\dot{M}_s$ ausgelegt, das bedeutet, dass die Strömungskanäle und die Beschaufelung entsprechende Geometrien aufweisen.

Die Schluckfähigkeit der Niederdruck-Teilturbine 2c für einen maximalen Lastfall ohne Fernwärmeanzapfung liegt bei $\dot{M}_{s,max}$.

Es gilt

$$\dot{M}_s < \dot{M}_{s,max} \ .$$

Das bedeutet, dass die Niederdruckteilturbine 2c bewusst für eine deutlich kleinere Schluckfähigkeit als für den 100% Lastfall ohne Wärmeauskopplung ausgelegt ist.

Es gilt ferner

$$\dot{M}_s = \alpha * \dot{M}_{s,max} \ .$$

$\alpha$ kann die Werte annehmen zwischen 0,5 und 0,99; 0,5 und 0,9; 0,5 und 0,8; 0,6 und 0,99; 0,6 und 0,9; 0,6 und 0,8; 0,7 und 0,9 oder 0,7 und 0,8.

Die Dampfkraftanlage 1 wird folgendermaßen betrieben: Dampf wird im Dampferzeuger 18 erzeugt und strömt zu der Hochdruck-Teilturbine 2a und von dort zu einem Zwischenüberhitzer 22, wobei der Dampf im Zwischenüberhitzer 22 erwärmt wird und anschließend durch die Mitteldruck-Teilturbine 2b strömt. Der Dampf strömt dann anschließend aus der Mitteldruck-Teilturbine 2b über eine Überströmleitung 6 zu der Niederdruck-Teilturbine 2c. Die Mitteldruck-Teilturbine 2b weist eine Fernwärmeanzapfung (Fernwärmeauskopplung 24) auf, wobei die Niederdruck-Teilturbine 2c für eine Schluckfähigkeit ausgelegt wird, die unter der Schluckfähigkeit liegt, die einer Auslegung der Niederdruck-Teilturbine 2c bei einem maximalen Lastfall ohne Fernwärmeauskopplung entsprechen würde.

Die Niederdruck-Teilturbine 2c wird mit weiteren Niederdruck-Dampfeinlässen 8 ausgebildet, die mit Dampf aus der Überströmleitung 6 versorgt werden.

Der Eintrittsdruck des Dampfes zur Niederdruck-Teilturbine 2c wird über Armaturen 11, 7 in der Abzweigung der Überströmleitung 6 geregelt.

Im Falle eines Betriebes ohne Fernwärmeauskopplung wird der Eintrittsdruck des Dampfes zur Niederdruck-Teilturbine 2c im Wesentlichen konstant geregelt.

**Patentansprüche**

1. Dampfkraftanlage (1) umfassend
   eine Dampfturbine (2) umfassend
   eine Hochdruck-Teilturbine (2a), eine Mitteldruck-Teilturbine (2b) und eine Niederdruck-Teilturbine,
   wobei die Mitteldruck-Teilturbine (2b) einen Mitteldruck-Dampfeinlass (23) und einen Mitteldruck-Dampfauslass (3) aufweist,
   wobei die Niederdruck-Teilturbine (2c) einen Niederdruck-Dampfeinlass (4) und einen Niederdruck-Dampfauslass (5) aufweist,
   wobei die Mitteldruck-Teilturbine (2b) eine Mitteldruck-Strömungsrichtung aufweisende Mitteldruck-Beschaufelung und die Niederdruck-Teilturbine (2c) eine Niederdruck-Strömungsrichtung aufweisende Niederdruck-Beschaufelung aufweist,
   eine Überströmleitung (6), die den Mitteldruck-Dampfauslass (3) strömungstechnisch mit dem Niederdruck-Dampfeinlass (4) verbindet,
   wobei in der Überströmleitung (6) eine Armatur (7) angeordnet ist,
   **dadurch gekennzeichnet, dass**
   die Niederdruck-Teilturbine (2c) einen weiteren Niederdruck-Dampfeinlass (4) in die Niederdruck-Beschaufelung aufweist, der stromabwärts der Niederdruck-Strömungsrichtung angeordnet ist.

2. Dampfkraftanlage (1) nach Anspruch 1,
   wobei die Überströmleitung (6) eine Abzweigung (10) aufweist und die Abzweigung (10) strömungstechnisch mit dem weiteren Niederdruck-Dampfeinlass (4) verbunden ist.

3. Dampfkraftanlage (1) nach Anspruch 1 oder 2,
   wobei in der Abzweigung (10) eine Abzweigungs-Armatur (11) angeordnet ist.

4. Dampfkraftanlage (1) nach einem der vorhergehenden Ansprüche,
   wobei die Armatur (7) als Klappe oder Ventil ausgebildet ist.

5. Dampfkraftanlage (1) nach einem der vorhergehenden Ansprüche,
   wobei die Abzweigungs-Armatur (11) als Klappe oder Ventil ausgebildet ist.

6. Dampfkraftanlage (1) nach einem der vorhergehenden Ansprüche,
   wobei die Niederdruck-Teilturbine (2c) eine erste Flut (12) mit einer ersten Flut-Beschaufelung und eine zweite Flut (13) mit einer zweiten Flut-Beschaufelung aufweist,
   wobei die Abzweigung (10) eine erste Abzweigung (14) zur ersten Flut-Beschaufelung aufweist und dort in einen ersten Flut-Dampfeinlass (16) mündet,
   wobei die Abzweigung (10) eine zweite Abzweigung (13) zur zweiten Flut-Beschaufelung aufweist und dort in einen zweiten Flut-Dampfeinlass (17) mündet.

7. Dampfkraftanlage (1) nach einem der vorhergehenden Ansprüche,
   wobei die Hochdruck-Teilturbine (2a) einen Hochdruck-Dampfauslass (21) aufweist,
   wobei die Dampfkraftanlage (1) einen Zwischenüberhitzer (22) zum Erhitzen von Dampf aufweist, der strömungstechnisch mit dem Hochdruck-Dampfauslass (21) und dem Mitteldruck-Dampfeinlass (23) verbunden ist.

8. Dampfkraftanlage (1) nach einem der vorhergehenden Ansprüche,
   wobei die Mitteldruck-Teilturbine (2b) eine Fernwärme-Anzapfung zum Anzapfen von Dampf für Fernwärme aufweist, wobei die Niederdruck-Teilturbine (2c) für eine Schluckfähigkeit ($\dot{M}_s$) ausgelegt ist,
   wobei die Schluckfähigkeit ($\dot{M}_s$) der Niederdruck-Teilturbine (2c) für einen maximalen Lastfall ohne Fernwärme-Anzapfung bei $\dot{M}_{s,max}$ liegt,
   wobei gilt $\dot{M}_s < \dot{M}_{s,max}$.

9. Dampfkraftanlage (1) nach Anspruch 8,
   wobei gilt: $\dot{M}_s = \alpha * \dot{M}_{s,max}$ wobei $\alpha$ Werte annimmt zwischen 0,5 und 0,99; 0,5 und 0,9; 0,5 und 0,8; 0,6 und 0,99; 0,6 und 0,9; 0,6 und 0,8; 0,7 und 0,9 oder 0,7 und 0,8.

10. Verfahren zum Betreiben einer Dampfkraftanlage (1), wobei ein Dampf in einem Dampferzeuger erzeugt wird und zu einer Hochdruck-Teilturbine (2a) strömt und von dort zu einem Zwischenüberhitzer (22),
    wobei der Dampf im Zwischenüberhitzer (22) erwärmt wird und durch eine Mitteldruck-Teilturbine (2b) strömt,
    wobei der Dampf nach der Mitteldruck-Teilturbine (2b) über eine Überströmleitung (6) zu einer Niederdruck-Teilturbine (2c) geführt wird,
    wobei die Mitteldruck-Teilturbine (2b) eine Fernwärme-Anzapfung zum Auskoppeln von Fernwärme-Dampf aufweist und die Niederdruck-Teilturbine (2c) für eine Schluckfähigkeit ($\dot{M}_{s,max}$) ausgelegt wird, die unter der Schluckfähigkeit ($\dot{M}_{s,max}$) liegt, die einer Auslegung der Niederdruck-Teilturbine (2c) bei einem maximalen Lastfall ohne Fernwärme-Auskopplung (24) entsprechen würde.

11. Verfahren nach Anspruch 10,
    wobei die Niederdruck-Teilturbine (2c) mit weiteren Niederdruck-Dampfeinlässen (8) ausgebildet wird, die mit Dampf aus der Überströmleitung (6) versorgt werden.

12. Verfahren nach Anspruch 10 oder 11,
    wobei der Eintrittsdruck des Dampfes zur Niederdruck-Teilturbine (2c) über Armaturen (7) in der Abzweigung der Überströmleitung (6) zum weiteren Niederdruck-Dampfeinlass (4) geregelt wird.

13. Verfahren nach Anspruch 12,
    wobei im Falle eines Betriebes ohne Fernwärme-Auskopplung (24) der Eintrittsdruck des Dampfs zur Niederdruck-Teilturbine (2c) im Wesentlichen konstant geregelt wird.

**Europäisches Patentamt**
**European Patent Office**
**Office européen des brevets**

## EUROPÄISCHER RECHERCHENBERICHT

Nummer der Anmeldung

EP 14 15 9565

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 2 700 790 A1 (SIEMENS AG [DE]) 26. Februar 2014 (2014-02-26) * Absatz [0017] - Absatz [0025]; Ansprüche; Abbildung * * Zusammenfassung * ----- | 1-13 | INV. F01K7/08 F01K17/02 |
| Y | EP 2 667 027 A1 (ALSTOM TECHNOLOGY LTD [CH]) 27. November 2013 (2013-11-27) * Absatz [0023] - Absatz [0033]; Ansprüche; Abbildungen * * Zusammenfassung * ----- | 1-13 | |
| Y A | US 2010/293973 A1 (ERICKSON DONALD CHARLES [US]) 25. November 2010 (2010-11-25) * Absatz [0015] - Absatz [0029]; Ansprüche; Abbildungen * * Zusammenfassung * ----- | 1,2,4, 7-13 3,5,6 | |
| Y A | US 2011/006529 A1 (ROSE STEVEN ANDREW [US] ET AL) 13. Januar 2011 (2011-01-13) * Absatz [0006] - Absatz [0022]; Ansprüche; Abbildung; Tabelle 1 * * Zusammenfassung * ----- | 1,2,4, 7-13 3,5,6 | RECHERCHIERTE SACHGEBIETE (IPC) F01K |

Der vorliegende Recherchenbericht wurde für alle Patentansprüche erstellt

| Recherchenort | Abschlußdatum der Recherche | Prüfer |
|---|---|---|
| München | 6. Juni 2014 | Zerf, Georges |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

           .......................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 15 9565

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-06-2014

| Im Recherchenbericht angeführtes Patentdokument | Datum der Veröffentlichung | Mitglied(er) der Patentfamilie | Datum der Veröffentlichung |
|---|---|---|---|
| EP 2700790 A1 | 26-02-2014 | KEINE | |
| EP 2667027 A1 | 27-11-2013 | CN 103423111 A<br>EP 2667027 A1<br>JP 2013245683 A<br>US 2013312410 A1 | 04-12-2013<br>27-11-2013<br>09-12-2013<br>28-11-2013 |
| US 2010293973 A1 | 25-11-2010 | KEINE | |
| US 2011006529 A1 | 13-01-2011 | EP 2294298 A1<br>JP 2012533017 A<br>US 2011006529 A1<br>WO 2011005343 A1 | 16-03-2011<br>20-12-2012<br>13-01-2011<br>13-01-2011 |

EPO FORM P0461

Für nähere Einzelheiten zu diesem Anhang : siehe Amtsblatt des Europäischen Patentamts, Nr.12/82